Europäisches Patentamt

(19) European Patent Office

Office européen des brevets

(11) Publication number: **0 208 017**
**A2**

(12) **EUROPEAN PATENT APPLICATION**

(21) Application number: 85115444.3

(22) Date of filing: 05.12.85

(51) Int. Cl.⁴: **F 16 H 25/12**
**F 16 H 25/22**

(30) Priority: 08.07.85 ES 544971

(43) Date of publication of application:
14.01.87 Bulletin 87/3

(84) Designated Contracting States:
AT BE CH DE FR GB IT LI LU NL SE

(71) Applicant: Ercilla Sagarminaga, Maria
Montorretas, 5
Durango Vizcaya(ES)

(72) Inventor: Estancona, Ercilla Jose Antonio
Montorretas, 5
Durango (Vizcaya)(ES)

(74) Representative: Tetzner, Volkmar, Dr.-Ing. Dr. Jur.
Van-Gogh-Strasse 3
D-8000 München 71(DE)

(54) Improvements introduced into endless spindles for the transmission of motion.

(57) The invention relates to improvements of endless spindles for the transmission of motion.

The conventional nut of the spindle is replaced by a nut-locknut assembly, all of the rollers situated between the nut and the screw being placed in like manner, i.e. perpendicular to a certain face of the screw and/or nut thread groove. The invention ensures a play-free adjustment between screw and nut.

EP 0 208 017 A2

**0208017**

S P E C I F I C A T I O N

The present invention, as evidenced by the title of the specification, refers to a number of improvements introduced into endless spindles for the transmission of motion.

As is known, one of the conventional methods of converting angular motion to linear motion, and vice versa, consists in using a screw-and-nut assembly, such that if either of the two elements is axially fixed and a rotary motion is applied thereto, the other will be axially displaced.

Endless spindles of this type are used in almost all fields of industry, such as, for example, in machine tools, gantry cranes, car-driving mechanisms, aeroplane ailerons and undercarriages, etc., and generally, as aforesaid, whenever translation is to be obtained from a rotary motion.

Whenever a heavy object, or a light object which must overcome a great resistance in order to move, is displaced by such motion converting systems, a large amount of friction is created between nut and screw which hinders displacement and simultaneously results in great wear on the constitutive materials of the surfaces under friction.

In an attempt to overcome this problem, a long-known solution has been to place a number of balls between the thread grooves of the nut and screw, which balls act

.../...

as bearings. Thus, a helical duct of circular section is defined between nut and screw, wherein are placed the mentioned balls, the helical duct being closed by means of a further passage or return tube within the nut, which closes one end of the helical duct on the other, such that, on being displaced along the duct and reaching the trailing end of the nut, the balls return to the leading end thereof, thus establishing a closed circuit which ensures the correct functioning of the bearing.

The basic disadvantage of this solution is centred on the fact that there is only a point contact between each ball and the corresponding duct, and the transmission of the load from one element to the other, i.e., from the screw to the nut, is therefore effected on an alignment of points, corresponding to the set of balls, which as a whole defines a very restricted total load for said surface. Such nut-screw assemblies are thus unable to resist large loads, and, furthermore, wear rapidly.

This problem may be overcome by replacing the mentioned balls for cylindrical rollers, thereby establishing angular thread grooves with an amplitude of $90^{\circ}$, whereby the above point contact is now a linear support, along the axes of the mentioned rollers.

Such a solution is disclosed in US patent 3.055.230, wherein it is further provided that the diameter of said rollers is slightly greater than their axial length, and

.../...

that said rollers are alternately positioned in the corresponding passage or duct defined by the thread grooves, i.e., that the axis of each roller is perpendicular to that of the two adjacent rollers. Thus, half of the rollers work in a specific direction of motion during conversion, whereas the other half work in the opposite direction, when the two sets of rollers are alternately positioned.

Such a solution confers to the endless spindle a high load capacity, a greater resistance to wear, and also the ability to operate at high speeds without a risk of reaching resonant vibration.

However, this solution presents a further, and very important, problem, being that the mentioned alternate or crossed positioning of the rollers gives rise to looseness or play in the forward and backward movement of the spindle, two further problems being derived herefrom: on the one hand, said looseness prevents the accurate displacement of the spindle with respect to the nut, which is of great importance in machine tools, and, on the other hand, it creates "shock" effects in the conversions of the axial displacement of the spindle which accelerate wear and thus tend to increase looseness.

The improvements disclosed in the invention, for endless spindles of the type using rollers as friction reducing elements between the screw and nut, provide a total solution for the above problem, ensuring a play-free ad-

.../...

justment between screw and nut, and even allowing for the elimination of any looseness or play which might appear in the normal use of the spindle due to the likewise normal wear of its constitutive elements.

In order to achieve this solution, and in accordance with one of the improvements disclosed, the conventional nut of the spindle is replaced by a nut-locknut assembly, with the special particularity that all of the rollers situated between the nut and the screw are placed in like manner, i.e., perpendicular to a certain face of the screw and/or nut thread groove, as are the rollers corresponding to the locknut, these being placed perpendicular to the other face of the screw and/or locknut thread .

The set of rollers corresponding to the nut is obviously completely separate from the set corresponding to the locknut, both sets functioning as independent elements, and being provided with respective and likewise independent roller return tubes running from one end of the nut to the other, and from one end of the locknut to the other.

In accordance with the above structure, and due to the fact that the nut and locknut constitute separate elements, one of them operates when the spindle moves in a certain direction, the other remaining  stationary, whereas if the spindle moves in the opposite direction, said nut and locknut also operate inversely, i.e., the one previously in operation now remains stationary, and vice versa.

.../...

In accordance with another of the improvements disclosed, the nut and locknut are provided with means for interadjustment, which allow the relative position between the two elements to be regulated, i.e., the distance between the two may be adjusted with great precision, thereby preloading the nut and locknut rollers, and thus, when the rollers of either of these elements is in an operative position, and therefore pressed against one of the surfaces of the screw thread groove, the rollers of the other are likewise pressed against the screw, more specifically against the surface of the thread which is perpendicular to the former, any possible looseness which might arise, both on manufacture of the spindle and later on due to wear thereof, being thus completely eliminated.

More specifically, one or several broken washers are provided between the nut and locknut, whilst a number of slits are provided on the periphery of said elements, i.e., on areas of the nut and locknut near their opposed edges, in an axial direction thereto, which slits act as cotter pin holes for the relative locking between the two with the aid of corresponding cotter pins, after partially turning the nut with respect to the locknut, or vice versa, in order to obtain the correct degree of tightness thereof, against perpendicular faces of the screw thread, and through the corresponding sets of rollers.

Obviously, once the correct relative position between nut and locknut has been adjusted, the many facing cotter pin holes of the two elements being correspondingly positioned, the cotter pins are fitted into their respective housings by any conventional means, such as, for example, with the aid of screws.

The mentioned washers likewise aid the adjustment, such that, both with the washers and by means of relative rotation between nut and locknut, the most suitable relative positioning of the two may be obtained.

The nut and locknut are provided with respective steppings on their opposed surfaces, said steppings being double and complementary, for the correct seating of the washer or washers, and for better coupling and fastening between the two.

A further improvement provided by the invention refers to the recirculation system for the rollers in each of the two elements, i.e., in the nut and locknut. In accordance with the improvement, such recirculation is effected with the aid of a tube of rectangular section, which tube fits into a notch provided in both the nut and locknut which defines a passage between the two ends of the thread groove, the rollers reaching one end and being channeled towards the other, the position thereof being inverted in said tubes, for the rollers leaving the tube are perpendicular to those entering same, wherefor the middle section of said tube is twisted at an angle of 90°.

.../...

In order to complete the description being made, and to assist the better understanding of the characteristics of the invention, a set of drawings is attached to the present specification, as an integral part thereof, which, in a purely illustrative and non-restrictive manner, represents the following:

Fig. 1 shows a side elevation and longitudinal section of an endless spindle for the transmission of motion, in accordance with the improvements provided by the invention.

Fig. 2 shows a side elevation of the nut.

Fig. 3 shows a cross section of said nut along line A-B of fig. 2.

Fig. 4 shows a longitudinal section of the nut.

Fig. 5 shows a side elevation of the locknut.

Fig. 6 shows a cross section of said locknut along line C-D of fig. 5.

Fig. 7 shows a longitudinal section of the locknut.

Fig. 8 shows an enlarged view of the profile of the thread groove both of the nut and locknut.

Fig. 9 shows an enlarged profile of the spindle.

Fig. 10 shows an external view of the tubular element which constitutes the recirculation means for the rollers.

Fig. 11 shows a section of the same tubular element, showing how the rollers change their position along

.../...

said tube, their position at one end being perpendicular with respect to their position at the other end.

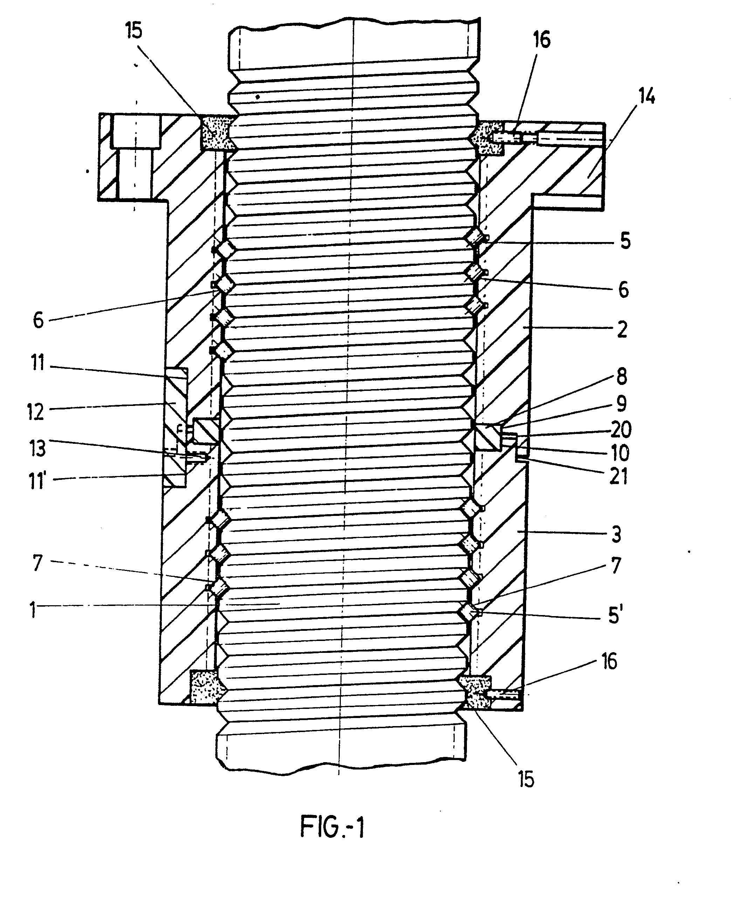

In light of the above figures, it can be observed that the endless spindle in accordance with the improvements provided, is constituted by a screw 1 having a nut 2 and a locknut 3, two respective sets of cylindrical rollers 5 being placed between the thread grooves of the screw 1 and of both the nut 2 and the locknut 3, and with the further particularity, as shown in fig. 1, that all of the rollers 5 corresponding to the nut 2 are placed such that they act on one same surface 6 of their thread groove, whereas the rollers 5' corresponding to the locknut 3 act likewise against one same surface 7 thereof, the surface 7 being perpendicular to the previously mentioned surface 6 of the nut.

By means of this special structure, and as can likewise be inferred from fig. 1, when the screw 1 rotates in a specific direction, the nut 2 will move and the locknut 3 will remain stationary, whereas the reverse occurs when the spindle turns in the opposite direction, i.e., the locknut 3 will be in operation and the nut 2 will remain stationary.

Furthermore, said structure allows the adoption of the most suitable distance between the nut 2 and the locknut 3, so that, whichever of the two may be in an operative position, both the rollers 5 of the former and the rollers 5' of the latter are pressed against their respective rolling surfaces or ways 6-7, the pressure of one set of

.../...

rollers opposing the pressure of the other set, given the perpendicularity between the two ways. This pressure does not hinder the relative rotation between nut-locknut 2-3 and the spindle 1, but rather avoids any possible play between the two elements.

As is evident, adjustment of the distance between nut and locknut will be effected on manufacture of the spindle, but said adjustment may also be effected in the event that play appears due to the normal wear on the constitutive elements of the assembly.

In order to adjust the distance between the nut and locknut, one or more washers, diametrically broken, are provided between the opposing surfaces of said elements, which washers maintain their correct operative position due to a stepping 9 provided in the nut 2, which stepping 9 is complementary to a second stepping 10 provided in the locknut 3, such that, on varying the width or number of the washers used, a minimum distance is defined between the nut and locknut, which distance is obviously achieved by turning one with respect to the other.

In order to keep the nut 2 and locknut 3 in their suitable position, a plurality of cotter pin holes 11-11' have been provided on the periphery thereof and in an area near their plane of union, which cotter holes of both elements will be facing in many relative positions and receive respective cotter pins 12 which fit into one of the elements,

.../...

such as the locknut 3, with the aid of screws threaded into housings 13 of the locknut.

In order to complement the structure described, and being outside the scope of the invention, the nut may include a perimetral expansion, marked 14 as shown in fig. 1, onto which is fastened the object to be displaced, and seals 15, suitably fastened with the aid of setscrews 16, are established between the free end areas of the nut and locknut and the screw 1, which seals prevent the entry of dirt and dust into the operative area of the assembly and the loss of lubricant contained therein.

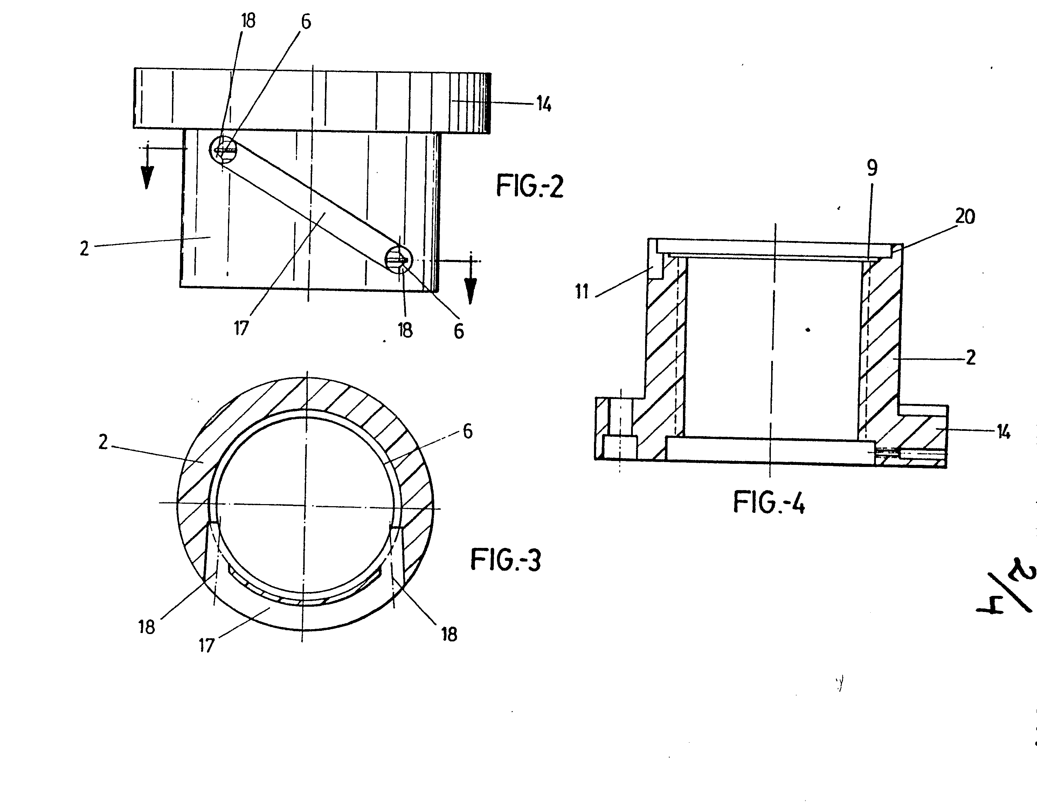

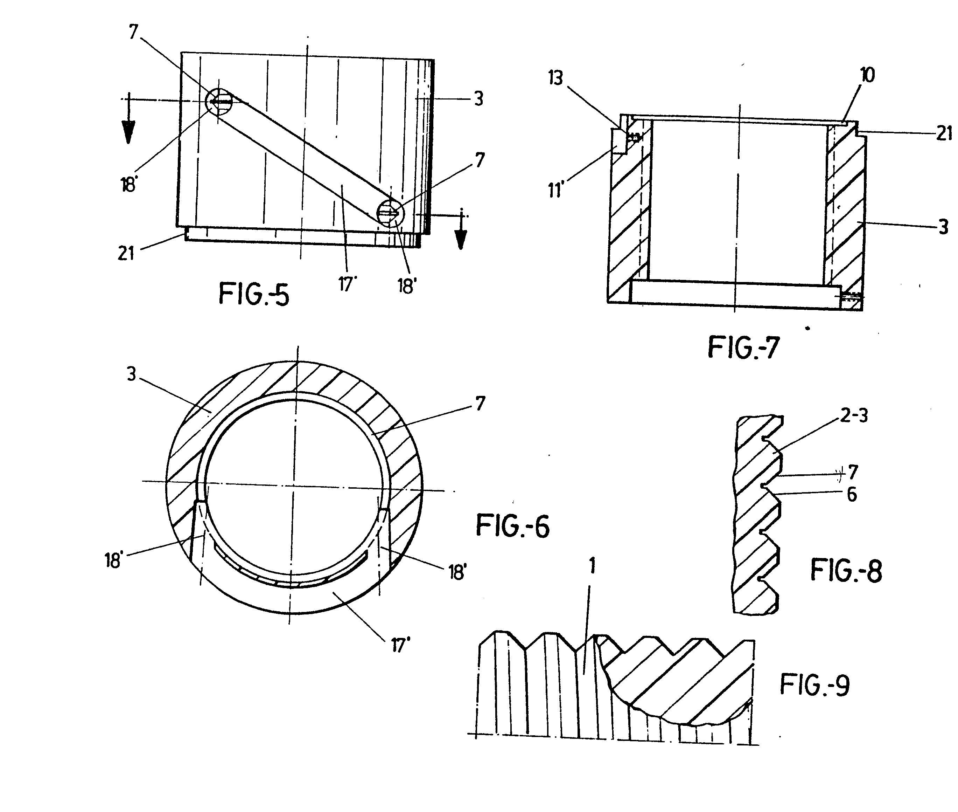

On the other hand, and as can be observed in figures 2 and 5, in order to recirculate the rollers 5 between the ends of thread grooves 6 and 7 of the nut and locknut, it has been provided that each of said elements has a notch 17-17' on its side surface, the ends of which notch are situated in correspondence with the beginning and end of said thread groove, and are internally communicated by means of openings 17-18 and 17'-18' which receive respective tubes 19 of rectangular section and having a middle section of the same length and curvature as the notches 17-17' and bent end sectors which fit into the openings 18-18', for reaching the ends of the corresponding thread groove 6-7.

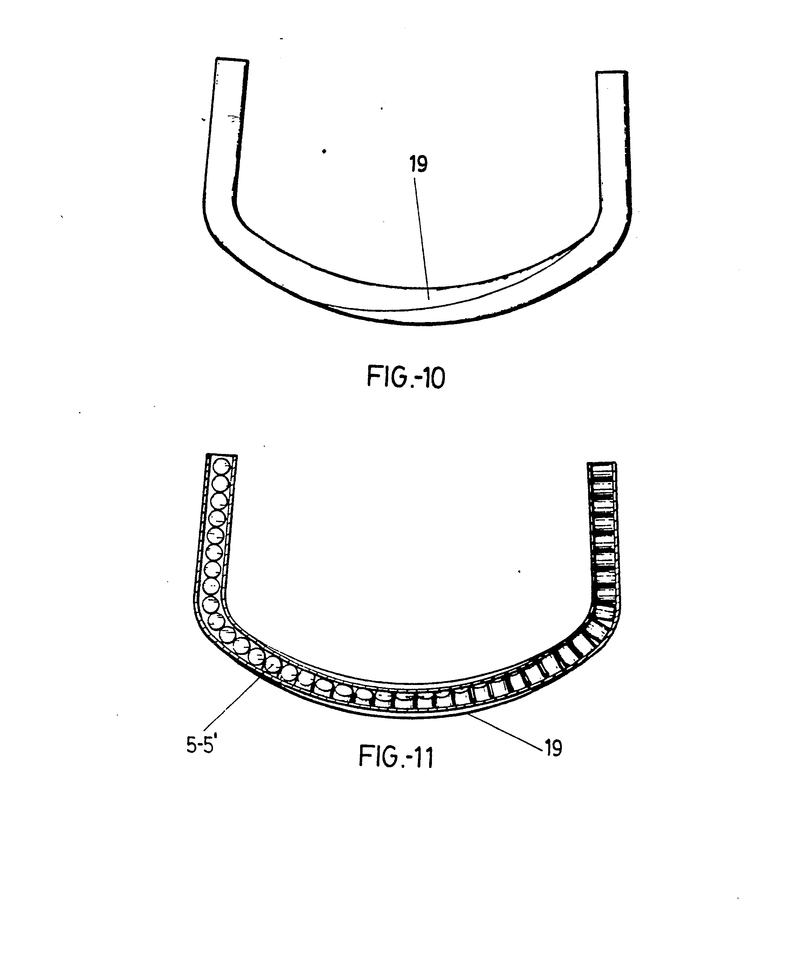

Furthermore, the middle section of said tube, as shown in figure 10, is twisted at an angle of 90°, so that the rollers 5-5' which are displaced therein during recirc-

.../...

ulation from the trailing end of the nut or locknut towards the leading end thereof, change their position gradually, as shown in fig. 11, such that on leaving the tube 19 they are perpendicular with respect to their position on entering same, the rollers 5-5' thereby reaching the leading area of the nut or locknut in the appropriate and foreseen position.

It should finally be pointed out that, in order to achieve the correct coupling and fastening between the nut and locknut, there are provided, on the facing areas thereof, complementary steppings 20-21, in addition to the steppings 9 and 10 for the washer or washers 8, which steppings 20-21 determine that one of said elements, such as the locknut 3, is partially and axially coupled within the other, i.e., the nut 2.

Thus, and in accordance with the structure described, the coupling of nut and locknut, which can be axially adjusted, allows the rollers of each element to be preloaded, thereby avoiding the possibility of play or tolerances in the displacements of the spindle, due to the fact that the set of rollers corresponding to the nut rests on thread groove surfaces thereof which are perpendicular to the surfaces of the thread grooves of the locknut on which rest the rollers of this latter.

It is not considered necessary to extend the present description any further for a person skilled in the art to understand the scope of the invention and the ad-

.../...

0208017

- 12 -

vantages whicn are derived therefrom.

The materials, shape, size and organisation of the elements may vary, provided they do not affect the essentiality of the invention.

The terms used in the present specification should be understood to have a wide and non-restrictive meaning.

# C L A I M S

1.- Improvements introduced into endless spindles for the transmission of motion, specifically in spindles of the type wherein a plurality of cylindrical rollers which reduce friction between nut and screw during their relative displacement are placed between said nut and screw, essentially characterised in that they consist of a nut-locknut assembly placed on the screw, said assembly being comprised by two independent elements joined together with the possibility of adjustment of the axial distance therebetween, each of said elements, namely the nut and locknut, being provided with a set of respective and independent rollers having means for recirculation between the ends of the thread groove, it having been provided that all of the rollers corresponding to one of the elements adopt the same position, i.e., operatively resting against the surfaces of their respective thread grooves, and are perpendicular to the other set, in order that a suitable distance between

.../...

nut and locknut results in a preload on the rollers against the respective ways defined by the corresponding surfaces of the thread grooves, which ensures a secure coupling between nut-locknut and screw, and eliminates any possible looseness between said elements.

2.- Improvements introduced into endless spindles for the transmission of motion, in accordance with claim 1, wherein the axial distance between nut and locknut is adjusted by means of one or more diametrically broken washers the width and number whereof may vary, which washers are placed between said elements and restrict the relative rotation of the nut with respect to the locknut, when tightened, and, therefore, the distance between the two, it having been provided that this relative position is maintained with the aid of cotter pins provided on the periphery of the two , elements, which pins fit into cotter pin holes, formed by both the nut and locknut in a plurality of relative positions therebetween, which cotter pins, after fitting into the corresponding cotter holes, are fastened by means of screws which cross the pins and thread into blind housings provided in said holes.

3.- Improvements introduced into endless spindles for the transmission of motion, in accordance with claim 1, wherein both the nut and locknut are provided with respective notches or inner steppings in their opposing surfaces for seating of the broken washer or washers, and with external

and complementary steppings for axially and partially coupling one of said elements within the other, in order to improve the coupling and fastening thereof.

4.- Improvements introduced into endless spindles for the transmission of motion, in accordance with claim 1, wherein a notch for the recirculation of the rollers has been provided on the outer surface of both the nut and locknut, between the trailing and leading ends of the thread grooves thereof, which notches have respective openings at each end for internal communication of the respective element, specifically for reaching the thread groove, it having been furthermore provided that said notch, together with the end openings thereof, defines the area onto which a tubular body of rectangular section is to be fitted, which tube constitutes the actual passage for recirculation of the rollers, with the particularity that the middle section thereof is twisted through $90^{o}$ in order to obtain the suitable and gradual change in position of the rollers, in accordance with the position in which said rollers leave the thread groove and the position, perpendicular thereto, in which they must reach the leading area of said thread groove.

5.- Improvements introduced into endless spindles for the transmission of motion.

FIG.-1

FIG.-2

FIG.-3

FIG.-4

FIG.-5

FIG.-7

FIG.-6

FIG.-8

FIG.-9

4/4

FIG.-10

19

FIG.-11

5-5'

19